# EUROPÄISCHE PATENTANMELDUNG

(11) **EP 4 170 875 A1**
(43) Veröffentlichungstag der Anmeldung: **26.04.2023**
(21) Anmeldenummer: 21204084.4
(22) Anmeldetag: 21.10.2021
(51) Int. Cl.: H02K 15/02, H02K 1/20, H02K 1/32, H01F 3/02, H01F 41/02, B32B 1/08, B32B 3/26, B32B 15/18

(54) **VERFAHREN ZUR HERSTELLUNG MINDESTENS EINES FLÜSSIGKEITSKANALS IN EINEM BLECHPAKET UND DAMIT HERGESTELLTES BLECHPAKET**

(71) Anmelder: voestalpine Stahl GmbH, 4020 Linz (AT)
(72) Erfinder: Fluch, Ronald, 4020 Linz (AT)
(74) Vertreter: Jell, Friedrich

(57) **Zusammenfassung**

Es wird eine Verfahren zur Herstellung mindestens eines Flüssigkeitskanals (18) in einem Blechpaket (3), insbesondere für eine elektrische Maschine gezeigt, bei dem in ein Blech oder Blechband (5) mehrere Aussparungen (16) eingebracht werden, nachfolgend vom Blech oder Blechband (5) mehrere Blechteile (2a, 2b) vereinzelt werden, die je mindestens eine Aussparung (16) der Aussparungen (16) aufweisen, und die Blechteile (2a, 2b) derart übereinandergestapelt werden, dass die Aussparungen (16) zumindest den sich im Blechpaket (3) erstreckenden Flüssigkeitskanal (18) begrenzen. Um einen mediendichten Flüssigkeitskanal (18) zu schaffen wird vorgeschlagen, dass an zumindest zwei Aussparungen (16) jeweils ein Kragen (20) erzeugt wird oder zumindest zwei Aussparungen (16) mit jeweils einem Kragen (20) in das Blech oder Blechband (5) eingebracht werden, wobei diese Kragen (20) derart ausgebildet werden, dass diese bei übereinandergestapelten Blechteilen (2a, 2b), welche diese Kragen (20) aufweisen, über die Länge (L) des Flüssigkeitskanals (18) ineinander eingreifen.

## Beschreibung

Die Erfindung betrifft eine Verfahren zur Herstellung mindestens eines Flüssigkeitskanals in einem Blechpaket, insbesondere für eine elektrische Maschine, und ein damit hergestelltes Blechpaket, bei welchem Verfahren in ein Blech oder Blechband mehrere Aussparungen eingebracht werden, nachfolgend vom Blech oder Blechband mehrere Blechteile vereinzelt werden, die je mindestens eine Aussparung der Aussparungen aufweisen, und die Blechteile derart übereinandergestapelt werden, dass die Aussparungen zumindest den sich im Blechpaket erstreckenden Flüssigkeitskanal begrenzen.

Zur Kühlung eines Blechpakets eines Stators einer elektrischen Maschine, nämlich eines Generators, ist es bekannt (EP2109206A1), im Blechpaket des Stators einen axialen Flüssigkeitskanal vorzusehen, der von Aussparungen in Blechteilen des Blechpakets begrenzt wird.

Hierzu werden - beispielsweise unter Anwendung eines Stanzpaketierverfahrens - diese Blechteile aus einem Blech oder Blechband ausgestanzt, in das vorher Aussparungen für den Flüssigkeitskanal eingestanzt wurden.

Nach dem Übereinanderstapeln der Blechteile werden diese zum Blechpaket laminiert, womit im Blechpaket ein axialer Flüssigkeitskanal hergestellt wird.

Der Flüssigkeitskanal wird von Kühlflüssigkeit durchströmt, wobei Problemen einer Leckage im Flüssigkeitskanal, etwa aufgrund von Laminierungsdefekten, durch Verwendung einer elektrisch isolierenden Kühlflüssigkeit begegnet wird. Elektrische Kurzschlüsse lassen sich damit zwar vermeiden - nachteilig erhöht ausgetretene Kühlflüssigkeit aber den Drehwiderstand an der elektrischen Maschine, was wiederum deren Wirkungsgrad reduziert.

Die Erfindung hat sich daher die Aufgabe gestellt, ein Verfahren der eingangs geschilderten Art derart zu verändern, dass reproduzierbar ein flüssigkeitsdichter Flüssigkeitskanal im Blechpaket geschaffen wird. Zudem soll das Verfahren einfach handhabbar sein und eine zeit- sowie kostengünstige Herstellung von Blechpakete ermöglichen.

Die Erfindung löst die gestellte Aufgabe durch die Merkmale des Anspruchs 1.

Wird an zumindest zwei Aussparungen jeweils ein Kragen erzeugt oder werden zumindest zwei Aussparungen mit jeweils einem Kragen in das Blech oder Blechband eingebracht, kann sich die Möglichkeit eröffnen, den Flüssigkeitskanal mediendicht auszubilden, wenn diese Kragen derart ausgebildet werden, dass diese bei übereinandergestapelten Blechteilen, welche diese Kragen aufweisen, über die Länge des Flüssigkeitskanals ineinander eingreifen.

Die ineinandergreifenden Kragen können nämlich den Rand des Flüssigkeitskanals übergreifend begrenzen, was den Flüssigkeitskanal reproduzierbar abdichten kann. Zudem ist das Verfahren zur Erzeugung eines Kragens mit gattungsgleichen Verfahrensschritten möglich, durch welche die Aussparungen am Blech oder Blechband oder am Blechteil geschaffen werden, sodass das Verfahren handhabungsfreundlich sowie zeit- und kostengünstig bleiben kann.

Im Gegensatz zum Stand der Technik kann sich das erfindungsgemäße Verfahren daher durch eine wesentlich höhere Prozessgeschwindigkeit auszeichnen.

Die Mediendichtheit des Flüssigkeitskanals kann weiter verbessert werden, wenn die Kragen jeweils einen konischen Abschnitt aufweisen. Insbesondere schließt der konische Abschnitt an die Blechebene des Blechs oder Blechbands bzw. des Blechteils mit diesem Kragen an. Vorzugsweise weist der konische Abschnitt eine erste Breite im Bereich von 0,2- bis 2-mal der Dicke des Blechs oder Blechbands auf, um den Flüssigkeitskanal noch besser abdichten zu können.

Eine erste Breite von mehr als des 0,2-mal der Dicke des Blechs oder Blechbands kann vor allem die Dichtheit aufgrund der Überlappung der betreffenden Blechteile weiter verbessern. Dieser Vorteil wird durch weitere Erhöhung der ersten Breite weiter verstärkt. Allerdings kann es bei einer Überlappung von mehr als 2-mal der Dicke des Blechs oder Blechbands zur Beeinträchtigung der magnetischen Eigenschaften in diesem Bereich kommen - darüber hinaus müssen auch Materialdefekte, wie beispielsweise Risse befürchtet werden, was die Reproduzierbarkeit des Verfahrens beeinträchtigen könnte.

Vorzugsweise sind die Kragen in ihrem konischen Abschnitt im Querschnitt hohlkegelstumpfförmig ausgebildet - was das Verfahren zur Erzeugung dieser Kragen weiter erleichtern kann.

Vorzugsweise weisen die Kragen jeweils einen flachen und zur Blechebene parallel versetzt verlaufenden Abschnitt auf, um damit unabhängig von der Blechdicke die Überlappung zwischen den Kragen einstellen zu können. Vorzugsweise schließt der flache Abschnitt an den konischen Abschnitt an. Vorzugsweise begrenzt der flache Abschnitt die Aussparung.

Beispielsweise weist der flache Abschnitt eine zweite Breite im Bereich von 0,2- bis 1,5-mal der Dicke des Blechs oder Blechbands auf. Ist die zweite Breite mehr als 0,2-mal der Dicke des Blechs oder Blechbands, kann sich die Reproduzierbarkeit des Verfahrens weiter verbessern. Der ebene Abschnitt kann nämlich etwa einen negativen Einfluss von Maßtoleranzen in der Blechdicke auf die Überlappungsfläche zwischen den Blechteilen im Bereich des Kragens verringern. Eine zweite Breite von mehr als 1,5-mal der Dicke des Blechs oder Blechbands kann hingegen die Geometrie am Blechpaket oder auch eine mögliche Anbindung an ein Kühlsystem erschweren.

Der Flüssigkeitskanal kann handhabungsfreundlich über die gesamte Länge des Blechpakets geschaffen werden, wenn im Blechpaket abgesehen vom ersten Blechteil alle diesem ersten Blechteil nachfolgend gestapelten Blechteile Kragen an ihren Aussparungen für den Flüssigkeitskanal aufweisen.

Vorzugsweise erstreckt sich der Flüssigkeitskanal in axialer Richtung des Blechpakets, um ein passgenaues Ineinandergreifen der Kragen zu gewährleisten und damit reproduzierbar einen mediendichten Flüssigkeitskanal zu schaffen. Vorzugsweise erstreckt sich der Flüssigkeitskanal außermittig des Blechpakets, vorzugsweise durch dieses durchgehend.

Das Verfahren zur Herstellung des Blechpakets kann erleichtert werden, wenn der Kragen in das Blech oder Blechband und/oder Blechteil geformt wird. Vorzugsweise werden die Kragen in Blech, Blechband und/oder Blechteil gedrückt - was gleiche ausgebildete Kragen kostengünstig und in den Abmessungen reproduzierbar schaffen kann.

Ein besonders mediendichter Flüssigkeitskanal kann reproduzierbar erzeugt werden, wenn Kragen mit einer Kragenhöhe im Bereich von größer gleich 0,5-mal bis kleiner gleich 2-mal, insbesondere 1-mal, der Dicke des Blechs oder Blechbands (5) erzeugt werden.

Eine weitere Erleichterung in der Handhabung des Verfahrens kann sich ergeben, wenn die Aussparungen in das Blech oder Blechband eingestanzt werden.

Vorzugsweise wird ein Blech oder Blechband mit einem Schmelzklebelack bereitgestellt, um damit zwischen den übereinandergestapelten Blechteilen für eine ausreichende Versieglung im Bereich des Flüssigkeitskanals zu sorgen. Insbesondere ist dieser Schmelzklebelack thermohärtbar und insbesondere als Backlack ausgebildet - was das Verfahren zum Laminieren der Blechteile zu einem Blechpaket besonders reproduzierbar gestaltet.

Das Verfahren kann weiter vereinfacht werden, wenn die zwischen einander einen Schmelzklebelack aufweisenden Blechteile beim und/oder nach dem Übereinanderstapeln miteinander verklebt werden. Dies gilt insbesondere, falls der Schmelzklebelack thermohärtbar, insbesondere Backlack, ist.

Vorzugsweise wird der Schmelzkleblack beim Stapeln der Blechteile aktiviert - was die Prozessgeschwindigkeit in der Herstellung eines Blechpakets mit einem Flüssigkeitskanal weiter erhöhen kann.

Dieser genannte Vorteil kann noch weiter erhöht werden, wenn die Blechteile in einer Paketbremse eines Folgestanzwerkzeugs gestapelt werden.

Die Erfindung hat sich außerdem die Aufgabe gestellt, ein Blechpaket mit einem Flüssigkeitskanal in der Dichtheit gegenüber einer Flüssigkeit zu verbessern und damit Leckagen zu vermeiden.

Die Erfindung löst die gestellte Aufgabe durch die Merkmale des Anspruchs 14.

Greifen beim Blechpaket die Kragen an Aussparungen der Blechteile nacheinander über die Länge des Flüssigkeitskanals ineinander, kann diese zu einem gegenüber Leckage besonders mediendichten Flüssigkeitskanal am Blechpaket führen.

Als besonders günstig für einen gegenüber Leckage dichten Flüssigkeitskanal kann sich herausstellen, wenn die Kragen jeweils einen konischen Abschnitt aufweisen und/oder jeweils einen, insbesondere an den konischen Abschnitt anschließenden, flachen und zur Blechebene parallel versetzten Abschnitt aufweisen.

In den Figuren ist beispielsweise der Erfindungsgegenstand anhand einer Ausführungsvariante näher dargestellt. Es zeigen
- Fig. 1: eine schematische Ansicht auf eine Vorrichtung zum Herstellen von Blechpaketen mit einem Flüssigkeitskanal,
- Fig. 2: eine vergrößerte Teilansicht auf den Flüssigkeitskanal eines Blechpakets und
- Fig. 3: eine vergrößerte Ansicht auf einen Kragen eines Blechteils des Blechpakets nach Fig. 2.

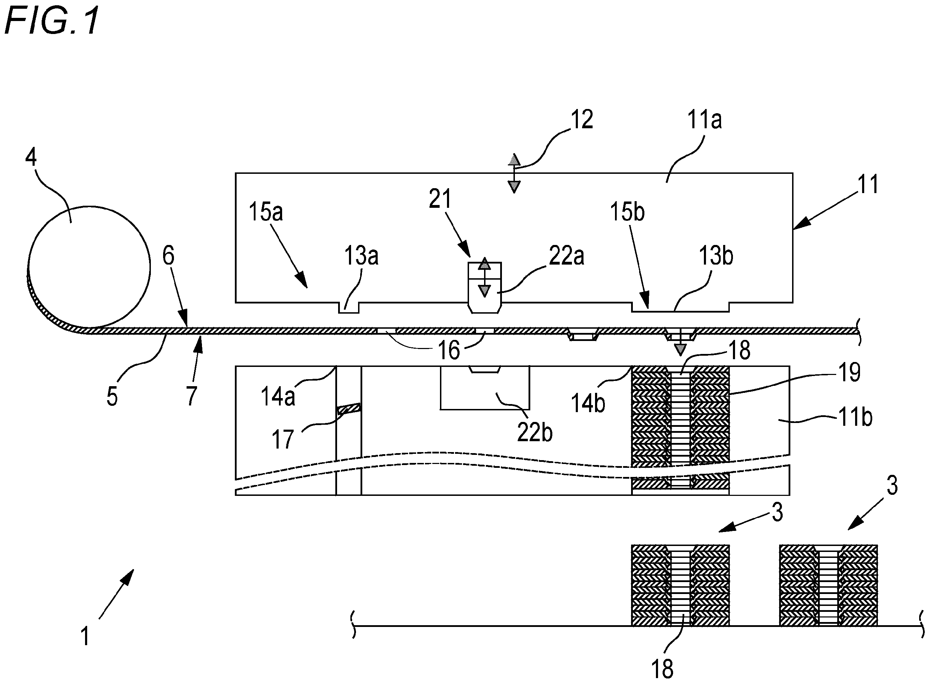

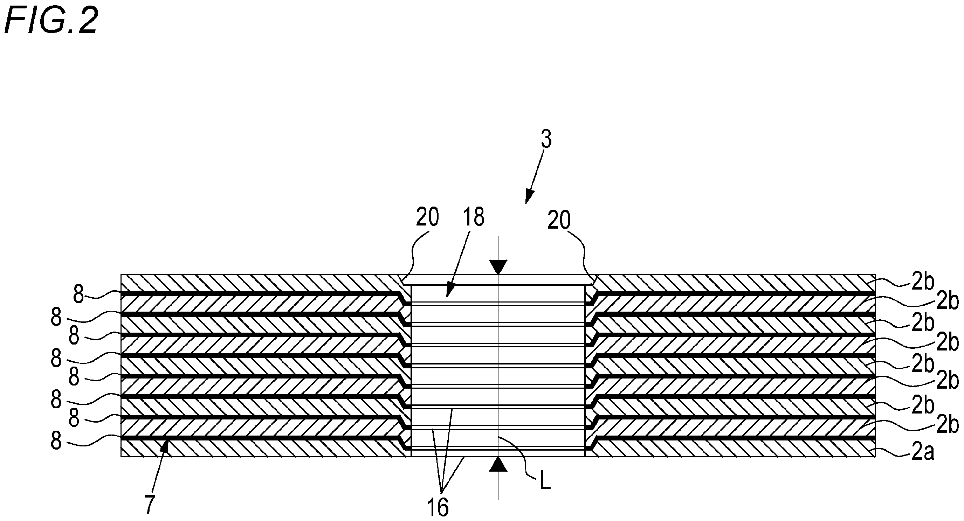

Gemäß dem Ausführungsbeispiel nach Fig. 1 wird eine Vorrichtung 1 zur Durchführung des erfindungsgemäßen Verfahrens schematisch dargestellt. Diese Vorrichtung 1 dient dem Paketieren von freigestanzten Blechteilen 2a, 2b zu Blechpaketen 3. Hierzu wird von einem Coil 4 ein Blechband 5, nämlich Elektroband (oder von einem Elektroblech im Falle eines Blechs), abgehaspelt, welches auf einer Flachseite 6 der beiden Flachseiten 6, 7 eine vollflächige Klebstoffschicht 8, nämlich heißhärtende Schmelzklebstoffschicht, wie Backlack, aufweist. Diese Klebstoffschichten 8 sind in Fig. 2 zu erkennen.

Das Blechband 5 weist eine Banddicke bzw. Dicke d von 0,3 mm (Millimeter) auf.

Vom klebstoffbeschichteten Blechband 5 werden mithilfe eines Stanzwerkzeugs 11 - im Ausführungsbeispiel Folgestanzwerkzeugs - mehrere Blechteile 2a, 2b vereinzelt, und zwar freigestanzt. Solch ein Freistanzen kann - im Allgemeinen erwähnt - ein Ausschneiden, Abschneiden, Ausklinken, Beschneiden, Zerteilen durch Ausdrücken etc. sein.

Wie der Fig. 1 weiter zu entnehmen, führt das Stanzwerkzeug 11 ein Schneiden mit mehreren Hüben 12 durch. Hierzu wirken die Schneiden 13a, 13b im Oberwerkzeug 11a des Stanzwerkzeugs 11 mit den jeweiligen Matrizen 14a, 14b des Unterwerkzeugs 11b des Stanzwerkzeugs 11 zusammen und bilden damit im Stanzwerkzeug 10 zwei Stanzstufen 15a, 15b aus.

Mit der ersten Schneide 13a des Oberwerkzeugs 11a wird eine Aussparung 16 in das Blechband 5 eingebracht, nämlich eingestanzt, was an dem ausgestanzten Reststück 17 in Fig. 1 zu erkennen ist.

Mit der Schneide 13b wird das Blechteil 2a bzw. 2b vom Blechband 5 vereinzelt.

Die Aussparung 16 wird im Blechband 5 für jedes vereinzelte Blechteil 2a, 2b vorgesehen, da diese Aussparung 16 im Blechpaket 3 einen axial durch das Blechpaket 3, insbesondere durchgehend, verlaufenden Flüssigkeitskanal 18 begrenzt - welcher in Fig. 2 besser zu erkennen ist.

Danach werden mithilfe der Stanzstufe 15b die Blechteile 2a, 2b freigestanzt und durch Druck des Oberwerkzeugs 11a in eine Stapeleinrichtung 19 gedrängt und dort gestapelt. Hierzu weist die Stapeleinrichtung 19 eine Führung im Unterwerkzeug 11b auf. Auch ist ein nicht dargestellter Gegenhalter 10 in der Führung vorgesehen.

Die Stapeleinrichtung 19 wird aktiv beheizt, um die Schmelzklebstoffschicht zu aktivieren und zwischen den Blechteilen 2 eine Klebstoffverbindung bzw. stoffschlüssige Verbindung herzustellen. Damit wird zu einem Blechpaket 3 laminiert.

Um einen gegenüber Leckage mediendichten Flüssigkeitskanal 18 zu schaffen, wird an den Aussparungen 16 der Blechteile 2b jeweils ein Kragen 20 durch Hohlprägen an der Umformstufe 21 mit einem Stempel 22a und einer Matrize 22b erzeugt. Das jeweils erste Blechteil 2a eines Blechpakets 3 weist solch einen Kragen 20 nicht auf. Die Kragen 20 der Blechteile 2b sind derart ausgebildet, dass diese bei übereinandergestapelten Blechteilen 2a, die diese Kragen 20 aufweisen, über die Länge L des Flüssigkeitskanals 18 ineinander eingreifen. Dies stellt einen besonders dichten Anschluss der Blechteile 2b her - und sichert damit den Flüssigkeitskanal 18 gegen ein Austreten von Flüssigkeit.

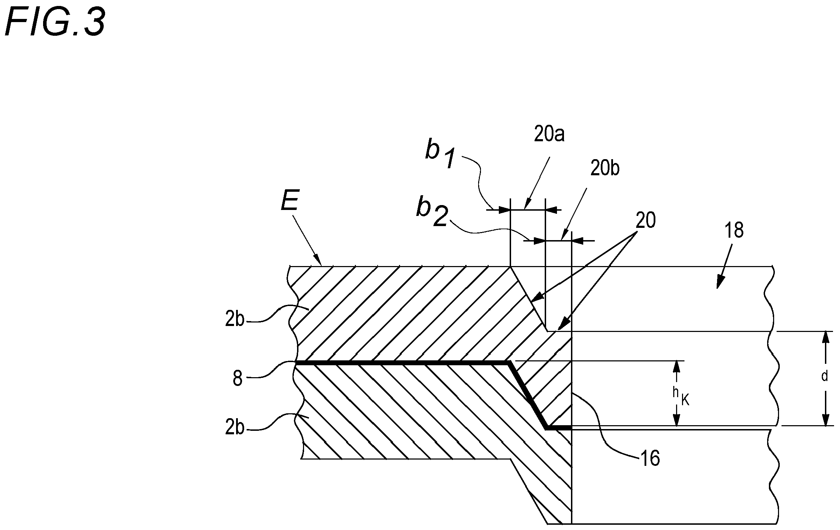

Wie in Fig. 3 zu erkennen, weisen die Kragen 20 jeweils einen konischen Abschnitt 20a und einen daran schließenden flachen, Abschnitt 20b auf, der an der Aussparung 16 endet.

Der konische Abschnitt 20a weist eine erste Breite b1 von 0,10 mm (Millimeter) auf, was den Flüssigkeitskanal gegenüber Leckage besonders gut abdichtet. Der daran anschließende flache Abschnitt 20b weist eine zweite Breite b2 von 0,075 mm (Millimeter) auf, was eine möglichst einfache Herstellbarkeit ermöglicht.

Der flache Abschnitt 20b ist parallel versetzt zur Blechebene E des Blechs oder Blechbands bzw. des betreffenden Blechteils 2a, 2b mit diesem Kragen 20 verlaufend - wie in Fig. 3 zu erkennen. Außerdem begrenzt der flache Abschnitt 20b die Aussparung 16. Auf diese Weise wird reproduzierbar ein besonders mediendichter Flüssigkeitskanal 18 durch das Blechpaket 3 geschaffen.

Wie in Fig. 3 weiter zu erkennen, ist der konische Abschnitt 20b im Querschnitt hohlkegelstumpfförmig ausgebildet.

Zudem ist die Kragenhöhe Kₕ 0,2 mm (Millimeter), was kleiner der Dicke d und größer der Hälfte der Dicke d des Blechbands 5 bzw. des davon abgetrennten Blechteils 2b ist. Dies schafft einen besonders stabilen Kragen 20 für einen robusten mediendichten Anschluss zwischen den Blechteilen 2a.

Vorzugsweise beträgt die Dicke d des Blechs oder Blechbands von 0,1 mm (Millimeter) bis 0,35 mm, bevorzugt von 0,2 mm bis 0,3 mm.

## Patentansprüche

1. Verfahren zur Herstellung mindestens eines Flüssigkeitskanals (18) in einem Blechpaket (3), insbesondere für eine elektrische Maschine, bei dem
in ein Blech oder Blechband (5) mehrere Aussparungen (16) eingebracht werden,
nachfolgend vom Blech oder Blechband (5) mehrere Blechteile (2a, 2b) vereinzelt werden, die je mindestens eine Aussparung (16) der Aussparungen (16) aufweisen, und
die Blechteile (2a, 2b) derart übereinandergestapelt werden, dass die Aussparungen (16) zumindest den sich im Blechpaket (3) erstreckenden Flüssigkeitskanal (18) begrenzen,
**dadurch gekennzeichnet, dass**
an zumindest zwei Aussparungen (16) jeweils ein Kragen (20) erzeugt wird oder zumindest zwei Aussparungen (16) mit jeweils einem Kragen (20) in das Blech oder Blechband (5) eingebracht werden,
wobei diese Kragen (20) derart ausgebildet werden, dass diese bei übereinandergestapelten Blechteilen (2a, 2b), welche diese Kragen (20) aufweisen, über die Länge (L) des Flüssigkeitskanals (18) ineinander eingreifen.

2. Verfahren nach Anspruch 1, **dadurch gekennzeichnet, dass** die Kragen (20) jeweils einen konischen Abschnitt (20a), insbesondere mit einer ersten Breite (b1) im Bereich von 0,2- bis 2-mal der Dicke (d) des Blechs oder Blechbands (5), aufweisen.

3. Verfahren nach Anspruch 2, **dadurch gekennzeichnet, dass** die Kragen (20) in ihrem konischen Abschnitt (20a) im Querschnitt hohlkegelstumpfförmig ausgebildet ist.

4. Verfahren nach einem der Ansprüche 1 bis 3, **dadurch gekennzeichnet, dass** die Kragen (20) jeweils einen, insbesondere an den konischen Abschnitt (20a) anschließenden, flachen und zur Blechebene (E) parallel versetzt verlaufenden Abschnitt (20b) aufweisen, die insbesondere eine zweite Breite (b2) im Bereich von 0,2- bis 1,5-mal der Dicke (d) des Blechs oder Blechbands (5) aufweisen.

5. Verfahren nach einem der Ansprüche 1 bis 4, **dadurch gekennzeichnet, dass** im Blechpaket (3) abgesehen vom ersten Blechteil (2a) alle diesem ersten Blechteil (2a) nachfolgend gestapelten Blechteile (2b) Kragen (20) an ihren Aussparungen (16) für den Flüssigkeitskanal (18) aufweisen.

6. Verfahren nach einem der Ansprüche 1 bis 5, **dadurch gekennzeichnet, dass** sich der Flüssigkeitskanal (18) in axialer Richtung, insbesondere außermittig des Blechpakets (3), vorzugsweise durch dieses durchgehend, verlaufend erstreckt.

7. Verfahren nach einem der Ansprüche 1 bis 6, **dadurch gekennzeichnet, dass** der Kragen (20) in das Blech oder Blechband (5) und/oder Blechteil (2b) geformt, insbesondere gedrückt, wird.

8. Verfahren nach einem der Ansprüche 1 bis 7, **dadurch gekennzeichnet, dass** Kragen (20) mit einer Kragenhöhe (h_{K}) im Bereich von größer gleich 0,5-mal bis kleiner gleich 2-mal, insbesondere 1-mal, der Dicke (d) des Blechs oder Blechbands (5) erzeugt werden.

9. Verfahren nach einem der Ansprüche 1 bis 8, **dadurch gekennzeichnet, dass** die Aussparungen (16) in das Blech oder Blechband (5) eingestanzt werden.

10. Verfahren nach einem der Ansprüche 1 bis 9, **dadurch gekennzeichnet, dass** ein Blech oder Blechband (5) mit einem, insbesondere thermohärtbaren, Schmelzklebelack (8), insbesondere Backlack, bereitgestellt wird.

11. Verfahren nach einem der Ansprüche 1 bis 10, **dadurch gekennzeichnet, dass** die zwischen einander einen, insbesondere thermohärtbaren, Schmelzklebelack (8), insbesondere Backlack, aufweisenden Blechteile (2a, 2b) beim und/oder nach dem Übereinanderstapeln miteinander verklebt werden.

12. Verfahren nach einem der Ansprüche 10 bis 11, **dadurch gekennzeichnet, dass** der Schmelzkleblack (8) beim Stapeln der Blechteile (2a, 2b) aktiviert wird.

13. Verfahren nach einem der Ansprüche 1 bis 12, **dadurch gekennzeichnet, dass** die Blechteile (2a, 2b) in einer Paketbremse eines Folgestanzwerkzeugs gestapelt werden.

14. Blechpaket, hergestellt durch ein Verfahren nach einem der Ansprüche 1 bis 13, **dadurch gekennzeichnet, dass** die Kragen (20) an Aussparungen (16) der Blechteile (2b) nacheinander über die Länge des Flüssigkeitskanals (18) ineinander eingreifen.

15. Blechpaket nach Anspruch 14, **dadurch gekennzeichnet, dass** die Kragen (20) jeweils einen konischen Abschnitt (20a) aufweisen und/oder die Kragen (20) jeweils einen, insbesondere an den konischen Abschnitt (20a) anschließenden, flachen und zur Blechebene (E) parallel versetzten Abschnitt (20b) aufweisen.
